# EUROPÄISCHE PATENTSCHRIFT

(11) **EP 2 343 255 B1**
(45) Veröffentlichungstag und Bekanntmachung des Hinweises auf die Patenterteilung: **11.03.2015**
(21) Anmeldenummer: 10150238.3
(22) Anmeldetag: 07.01.2010
(51) Int. Cl.: B65G 47/84

(54) **Greifeinrichtung für einen Transportstern und Transportstern**
Gripper device for a star conveyor and star conveyor
Dispositif de saisie pour une roue convoyeuse à étoile et roue convoyeuse à étoile

(43) Veröffentlichungstag der Anmeldung: 13.07.2011
(73) Patentinhaber: Tyrolon-Schulnig GmbH, 6395 Hochfilzen (AT)
(72) Erfinder: Schulnig, Ludwig, 6391 Fieberbrunn (AT)
(74) Vertreter: Rupprecht, Kay

(56) Entgegenhaltungen:
- EP-A1- 0 659 683
- EP-A1- 1 992 587
- WO-A1-03/078285
- GB-A- 2 110 630
- JP-A- 10 045 250
- JP-A- 57 046 881

## Beschreibung

Vorliegende Erfindung betrifft eine Greifeinrichtung für einen Transportstern oder dergleichen Transporteinrichtung, mit paarweise korrespondierend angeordneten Greifarmen zum Greifen und Halten eines Gefäßes oder dergleichen Körpers in einer Greifposition.

Darüber hinaus betrifft vorliegende Erfindung auch einen Transportstern für Gefäße oder dergleichen Körper, mit einem rotierbaren Grundkörper und mehreren über dessen Umfang verteilten Greifeinrichtungen gemäß der vorgenannten Art.

Derartige Transportsterne und Greifeinrichtungen für Transportsterne sind dem Grunde nach bekannt, beispielsweise aus Befüllungsmaschinen der Getränkeindustrie. Sie dienen dem Umsetzen, Zuführen und Abführen von Gefäßen, insbesondere, aber nicht ausschließlich von Flaschen wie beispielsweise Bier-, Wasser- oder Limonadenflaschen, in einem automatisierten Betriebsablauf. So werden einem Transportstern und der Mehrzahl daran angeordneter Greifeinrichtungen beispielsweise über Fließbänder Gefäße zugeführt, die dann von den paarweise angeordneten Greifarmen der Greifeinrichtungen erfasst und vom rotierenden Transportstern vom zuführenden Fließband genommen werden. Der Transportstern rotiert dann solange, bis sich die gegriffenen Gefäße an der richtigen Position, beispielsweise über einem abführenden Fließband befinden, dort geben die Greifeinrichtungen dann die gegriffenen Gefäße frei. Der Greif- und Öffnungsvorgang wird meist automatisch mittels entsprechender Steuereinrichtungen geregelt.

Aus dem Stand der Technik sind eine Vielzahl unterschiedlicher Transportsterne und unterschiedlicher Greifeinrichtungen für solche Transportsterne aber auch für andere in diesem Zusammenhang stehende Vorrichtungen bekannt, die hier alle unter dem Begriff Transportstern subsumiert sind.

Die Geschwindigkeit mit der obige Transportsterne rotieren bzw. Greifeinrichtungen zwischen einer Öffnungsstellung und einer Greifstellung wechseln, macht eine genaue Zentrierung der Greifbewegung und eine genaue Positionierung des gegriffenen Gefäßes in der Greifposition unabdingbar. Aus dem Stand der Technik sind hierzu unterschiedliche Konstruktionen bekannt, die sich dem Problem einer genauen Positionierung der gegriffenen Gefäße bzw. der Zentrierung der Greifarme widmen.

So beschreibt beispielsweise die DE 203 05 988 U1 eine Greifeinrichtung, die an der Unterseite eines Tragrings eines Transportsterns angeordnet ist. Die Greifarme einer jeden Greifeinrichtung sind paarweise korrespondierend zum Tragring radial nach außen weisend angeordnet und über eine Steuereinrichtung von der Schließin die Öffnungsstellung und umgekehrt bewegbar. Die Greifarme selber bestehen aus radial nach außen weisenden Greifarmen und radial nach innen weisenden Gegenarmen. An den Gegenarmen ist eine Zentrierverzahnung derart angeordnet, dass die Greifarme in ihrer Bewegung zwischen der Öffnungs- und der Schließstellung miteinander gekoppelt sind. Diese Konstruktion erlaubt ein relativ genaues Greifen der Gefäße auch bei hohen Arbeitstakten, sie ist jedoch hinsichtlich des Konstruktionsaufwandes und insbesondere des Materialaufwandes sehr kostenintensiv.

Eine andere Ausführungsform zeigt die DE 296 02 798 U1. Hier bestehen die Greifeinrichtungen ebenfalls aus radial nach außen weisenden Greifarmen. Allerdings ist nur bei einem Greifarm ein radial nach innen weisender Gegenarm ausgebildet. Dieser Gegenarm liegt an einer senkrecht zur Rotationsachse des Grundkörpers angeordneten Nockenwelle an, die das Steuerorgan bildet. Durch Rotation dieser Nockenwelle wird die Greifeinrichtung in eine Schließ- bzw. Öffnungsstellung gebracht. Dabei erfolgt das Auseinanderdrücken der Greifarme von der Schließ- in die Öffnungsstellung durch eine Druckfeder, die zwischen den beiden radial nach außen weisenden Greifarmen angeordnet ist. Damit die Greifbewegung gleichmäßig durchgeführt wird, sind die beiden Greifarme durch eine Zentrierverzahnung miteinander gekoppelt. Auch hier ist der Materialaufwand bei der Herstellung der Greifeinrichtung relativ hoch und darüber hinaus eine Adaption an unterschiedliche zu greifende Gefäße relativ aufwendig.

EP 1 992 587 A1 offenbart eine Vorrichtung zum Umsetzen von Behältern, die eine rotierende Plattform aufweist. Die Plattform trägt eine Vielzahl von Greifern mit Greifarmen, die die Behälter umgreifen und gegen eine Stütze halten, wobei die Stütze zur Positionierung der Behälter in der korrekten Position beiträgt. Die Stütze ist mit einer Schraube fixiert. Diese Greifer entsprechen dem Oberbegriff der Ansprüche 1 und 2.

Grundsätzlich stellt sich das Problem eine genaue Positionierung eines gegriffenen Gefäßes im Greifbereich der Greifeinrichtung bzw. am Transportstern zu garantieren und darüber hinaus die Greifeinrichtung mit einem vertretbaren Materialaufwand herzustellen.

Aufgabe der vorliegenden Erfindung ist es folglich eine Greifeinrichtung für einen Transportstern und einen Transportstern an sich anzubieten, der bei kostengünstiger Herstellung ein sicheres und genaues Greifen der zu greifenden Gefäße oder dergleichen Gegenstände erlaubt.

Diese Aufgabe wird durch eine Greifeinrichtung gemäß Patentanspruch 1 oder 2 und durch einen Transportstern gemäß Patentanspruch 9 gelöst.

Insbesondere wird diese Aufgabe folglich durch eine Greifeinrichtung für einen Transportstern oder dergleichen Transporteinrichtung gelöst, mit paarweise korrespondierend angeordneten Greifarmen zum Greifen und Halten eines Gefäßes oder dergleichen Körpers in einer Greifposition, wobei die Greifeinrichtung wenigstens ein von den Greifarmen unabhängiges Positionierelement aufweist, das derart ausgebildet ist, dass es das zu greifende Gefäß wenigstens entlang einer Achse in der Greifposition positioniert.

Darüber hinaus wird diese Aufgabe auch durch einen Transportstern für Gefäße oder dergleichen Körper gelöst, mit einem rotierbaren Grundkörper und mehreren über dessen Umfang verteilten Greifeinrichtungen gemäß der vorgenannten Art.

Im Umfang der vorliegenden Erfindung wird unter Gefäß jeder Gegenstand und insbesondere jeder Volumenkörper verstanden, den es in einem automatisierten Verfahren zu Greifen, Umzusetzten oder zu Positionieren gilt.

Ein wesentlicher Unterschied zu aus dem Stand der Technik bekannten Greifeinrichtungen ist die Verwendung eines von den Greifarmen unabhängigen Positionierelementes, das das zu greifende Gefäß wenigstens in der Greifposition positioniert. Das Positionierelement erhöht so zum einen die Genauigkeit der Greifeinrichtung und insbesondere die resultierende Positionierung des Gefäßes auch bei verschlissenen Greifeinrichtungen und entlastet zum anderen die anderen Bauteile der Greifeinrichtung und insbesondere die Greifarme. Die Folge hiervon sind geringere Bauteilquerschnitte und somit kostengünstigere und aufgrund des reduzierten Gewichts, auch langlebigere Bauteile. Durch die Positionierung des zu greifenden Gefäßes werden insbesondere asymmetrisch in die Greifeinrichtung eingetragenen "Positionierungslasten" reduziert. Gerade diese Lasten haben bei den Greifeinrichtungen aus dem Stand der Technik zu hohen Belastungen und einem hohen Verschleiß der Anlage geführt.

Wesentlich ist grundsätzlich, dass das Positionierelement unabhängig von den Greifarmen in der Greifeinrichtung ausgebildet ist. Dieses "unabhängig" bezieht sich also u. a. auf die Anordnung innerhalb der Greifeinrichtung und insbesondere darauf, dass bei einer Bewegung der Greifarme oder wenigstens eines Greifarms das Positionierelement sich nicht oder auf jeden Fall unabhängig davon bewegt.

Vorzugsweise weist das Positionierelement wenigstens einen Positionieranschlag auf, an dem das zu greifende Gefäß wenigstens in der Greifposition anschlägt. Je nach zu greifendem Gefäß können hier einer oder mehrere Positionieranschläge ihre Verwendung finden. Die Positionieranschläge sind dabei so ausgebildet, dass sie das zu greifende Gefäß in der geplanten Greifposition zentrieren bzw., sollte sich das Gefäß außerhalb dieser Greifposition befinden, das Positionieren erleichtern. Diese Positionierung kann im Zusammenspiel mit den Greifarmen erfolgen, wie dies im Folgenden noch näher beschrieben wird.

Vorzugsweise ist wenigstens ein Positionieranschlag wenigstens teilweise komplementär zur Außenkontur des zu greifenden Gefäßes ausgebildet. Das bedeutet, dass beispielsweise bei einer zylinderförmigen Flasche wenigstens ein Positionieranschlag der Außengeometrie dieser Flasche wenigstens teilweise nachempfunden ist. Hier ist es dann beispielsweise möglich, einen kreisbogenförmigen Positionieranschlag auszubilden, der in der Greifposition passgenau an der Außenkontur der zu greifenden Flasche anschlägt. Eine Adaption an die Außenkontur des Gefäßes kann sowohl ein-, zwei- aber auch dreiachsial erfolgen.

Vorzugsweise werden der oder die Positionieranschläge so relativ zur Greifposition des Gefäßes angeordnet, dass sie dieses effektiv in der Greifposition positionieren und insbesondere abstützen. So ist es von Vorteil, wenigstens zwei Positionieranschläge zu verwenden, die das zu greifende Gefäß entlang seiner Haupterstreckungsachse möglichst in dessen Endbereichen abstützen. Bei einer Flasche als dem zu greifenden Gefäß wären hier also der Flaschenboden und der Flaschenhals bevorzugte Anschlagpunkte für jeweils einen oder mehrere Positionieranschläge. Je höher die zu greifenden Gefäße (im Vergleich zu ihrer Breite) sind, desto mehr gewinnt dieser Punkt an Bedeutung. Vorzugsweise sind also die Positionieranschläge möglichst weit vom Schwerpunkt des zu greifenden Gefäßes entfernt angeordnet

Vorzugsweise sind die Greifarme und das Positionierelement derart relativ zueinander angeordnet und ausgebildet, dass das zu greifende Gefäß beim Greifvorgang gegen das Positionierelement gedrängt wird. Während des Greifens des Gefäßes durch die Greifarme wird also das zu greifende Gefäß von den Greifarmen "mitgenommen" und in Richtung des Positionierelementes bzw. dessen Positionieranschlages gedrängt. Dies garantiert zum einen die richtige Positionierung des Gefäßes in der Greifposition, zum anderen wird dadurch die auf die anderen Bauteile der Greifeinrichtung wirkenden Belastungen reduziert, da, dadurch dass die Greifarme das Gefäß gegen das Positionierelement bzw. dessen Anschlag drängen, verstärkt Reibungskräfte aktiviert werden und so das Gefäß sicher in der Greifposition gehalten wird.

In diesem Zusammenhang ist es beispielsweise möglich, die Greifarme entsprechend wenigstens teilweise komplementär zur Außengeometrie des zu greifenden Gefäßes auszubilden, so dass das Gefäß beim Greifen in eine optimale Greifposition rutscht und so gleichzeitig gegen einen entsprechend positionierten und ausgebildeten Positionieranschlag des Positionierelementes gedrängt wird.

Vorzugsweise weist das Positionierelement bzw. wenigstens ein Positionieranschlag eine entsprechende Haftbeschichtung auf, die eine zuverlässige Positionierung des Gefäßes in der Greifposition sicherstellt. Eine solche Haftbeschichtung kann beispielsweise eine Gummibeschichtung sein, die eine hohe Haftreibungskraft zwischen Positionierelement bzw. -anschlag und Gefäß aktiviert.

Gerade bei rotierenden Transportsternen erlaubt die Ausbildung der Greifarme bzw. Positionierelemente derart, dass das zu greifende Gefäß beim Greifvorgang gegen das Positionierelement gedrängt wird, eine sehr dichte Bestückung des Transportsterns mit den erfindungsgemäßen Greifeinrichtungen über dessen Umfang.

Bei der Greifeinrichtung, bei der die paarweise korrespondierenden Greifarme beidseitig an einem Zentralkörper angeordnet sind und über den die Greifeinrichtung vorzugsweise am Transportstern befestigt wird, ist vorzugsweise das Positionierelement an einem Montagepunkt an diesem Zentralkörper angeordnet, der in einer Betrachtungsrichtung entlang der Zentralkörperhauptachse zwischen den paarweise korrespondierenden Greifarmen liegt. In dieser Betrachtungsrichtung umgreifen also die Greifarme förmlich den Montagpunkt des Positionierelementes, so dass das Positionierelement im Anlagenverbund platzsparend untergebracht ist.

Vorzugsweise ist das Positionierelement zur Winkelhalbierenden des Winkels achsensymmetrisch ausgebildet, der von den Greifarmen in deren Greifposition eingeschlossen wird. Gerade bei über ein Kopplungsgetriebe miteinander gekoppelten Greifarmen garantiert eine solche symmetrische Ausbildung des Positionierungselementes eine platzsparende Greifhilfe, mit sehr genauer Greifleistung. Durch das "zwischen" den Greifarmen angeordnete Positionierelement, gegen das vorzugsweise das zu greifende Gefäß durch die Greifarme gedrängt wird, entsteht eine Greifeinrichtung, die auch bei hohen Greiftakten eine zuverlässige Positionierung bei geringem Material- und Platzbedarf erlaubt.

Vorzugsweise ist der Positionieranschlag mittels einer Justiereinrichtung relativ zur Greifeinrichtung entlang wenigstens einer Achse justierbar. Diese Einstellbarkeit des Positionieranschlages erlaubt eine Adaption an unterschiedliche Gefäße und darüber hinaus eine Adaption an möglicherweise ungenau arbeitende Greifeinrichtungen. Bei der zuvor erwähnten Anordnung der Positionieranschläge im Bereich eines Gefäßbodens und eines Gefäßhalses und grundsätzlich bei der Verwendung des erfindungsgemäßen Positionierelementes bei sehr hohen zu greifenden Gegenständen, ist es von Vorteil, wenn die Justiereinrichtung gerade ein solches Verlagern des Positionieranschlages in die Endbereiche der zu greifenden Gefäße erlaubt.

Grundsätzlich kann es von Vorteil sein, wenn das Positionierelement Positionieranschläge aufweist, die in diesen Endbereichen des zu greifenden Gefäßes angeordnet sind.

Vorzugsweise ist das Positionierelement starr an der Greifeinrichtung und insbesondere an einem Zentralkörper angeordnet. Dies erhöht die Genauigkeit mit der die zu greifenden Gefäße in der Greifposition positioniert werden können. Darüber hinaus ist es aber auch möglich, das Positionierelement über einen entsprechenden Aktuator an der Greifeinrichtung anzuordnen, so dass es beispielsweise bei Durchführung der Greifbewegung der Greifarme eine Bewegung in Richtung des Greifraumes und auf das zu greifende Gefäß zu oder in eine dergleichen geforderte Position durchführt, in der es dann das zu greifende Gefäß positioniert. Ein solcher Aktuator kann beispielsweise eine Steuereinrichtung sein, die insbesondere mit der Steuereinrichtung für die Greifarme gekoppelt ist, so dass die Bewegung des Positionierelementes zeitgleich oder gekoppelt mit der Bewegung der Greifarme erfolgt. Hier sind sämtliche aus dem Stand der Technik bekannte Konstruktionen anwendbar. Insbesondere kann das Positionierelement mit einer Nockenwelle in Wirkverbindung stehen, deren Nocken die Greifarme steuern und die einen Positioniernocken aufweist, der dann das Positionierelement in seine geforderte Position bewegt.

Erfindungsgemäß ist das Positionierelement über eine Montageeinrichtung lösbar am Zentralkörper angeordnet. Dies erlaubt die Adaption an unterschiedliche Gefäße und die Ausrüstung bestehender Greifeinrichtungen mit den Positionierelementen, bei Bedarf. So ist es beispielsweise möglich, einen Transportstern mit Greifeinrichtungen erst dann mit Positionierelementen auszurüsten, wenn deren Greifgenauigkeit aufgrund verschlissener Bauteile nachlässt.

Erfindungsgemäß weist die Montageeinrichtung einen Montagefortsatz an dem Zentralkörper und eine Montageaufnahme am Positionierelement oder umgekehrt auf, die miteinander in einem lösbaren Wirkeingriff bringbar sind. So ist es beispielsweise zwar möglich, an der Greifeinrichtung und insbesondere an dem zuvor erwähnten Zentralkörper einen Montagedorn anzuordnen, auf den das Positionierelement mit einer entsprechenden komplementär ausgebildeten Montagedornaufnahme aufsetzbar und dort arretierbar ist. Die erfindungsgemäß vorgesehene Möglichkeit betrifft die Ausbildung eines Nut- und Federsystems, bei dem an der Greifeinrichtung eine entsprechende T-förmige Feder hervorsteht, über die dann das Positionierelement vorzugsweise parallel zur Erstreckungsachse des Zentralkörpers mit einer entsprechenden komplementären Aufnahme aufgeschoben werden kann.

Im Allgemeinen kann die Montageeinrichtung derart ausgebildet sein, dass sie ein werkzeugloses Montieren und/oder Demontieren des Positionierelementes erlaubt. So ist es gemäß einem nebengeordneten Aspekt der Erfindung möglich, einen entsprechenden befederten Druckbolzen an der Montageeinrichtung vorzusehen, welcher im arretierten Zustand einen Montagefortsatz an der Greifeinrichtung hintergreift und so das Positionierelement an der Greifeinrichtung arretiert. Durch einen Zug an diesem befederten Druckbolzen lässt sich die Arretierung lösen und das Positionierelement entfernen.

Grundsätzlich erlaubt die Austauschbarkeit der Positionierelemente eine Adaption der Greifeinrichtung an unterschiedliche Gefäße, wobei die Schnelligkeit und Einfachheit des Wechsels die Standzeiten der Anlagen reduziert und so Kosten einspart.

Vorzugsweise ist das Positionierelement aus einem Spritzgusskunststoff hergestellt. Das resultierende Spritzgussbauteil erlaubt die kostengünstige Ausrüstung der Greifeinrichtung mit dem erfindungsgemäßen Positionierelement.

Wie bereits zu vor behandelt ist vorzugsweise der Positionieranschlag mittels einer Justiereinrichtung relativ zur Greifeinrichtung entlang wenigstens einer Achse justierbar. Hierfür können unterschiedliche Justierelemente, also Austauschbauteile, Längen- und formveränderbare Bauteile, Adapter etc. verwendet werden. Vorzugsweise ist das Positionierelement mehrteilig ausgebildet, wobei es wenigstens einen Hauptkörper und wenigstens einen Positionieranschlag aufweist, die über entsprechende Montagemittel miteinander verbindbar sind. Auf diese Weise können unterschiedliche Hauptkörper und unterschiedliche Positionieranschläge miteinander zu unterschiedlichen resultierenden Positionierelementen gruppiert werden. Es ist möglich das Positionierelement mit wenigstens einem Hauptkörper auszubilden, der insbesondere lösbar über eine Montageaufnahme an der Greifeinrichtung anordbar ist und der mit entsprechenden lösbaren Positionieranschlägen ausgerüstet werden kann, die dann in der Greifposition positionierend an den zu greifenden Gefäß anstehen. Über diese lösbaren Positionieranschläge kann dann eine jeweilige Adaption des Positionierelementes an unterschiedliche zu greifende Gefäße vorgenommen werden. Zusätzlich können unterschiedlich geformte Hauptkörper zu Adaptionszwecken verwendet werden. Auch kann insbesondere ein Hauptkörper mit entsprechenden Zusatz- oder Austauschelementen versehen werden, durch die sich die Position der Positionieranschläge verändern lässt. Natürlich ist es auch möglich, das Positionierelement teleskopierbar oder dergleichen höhen- und größenverstellbar auszubilden, um eine Adaption des Positionierelementes an unterschiedliche Gefäße oder auch Greifpositionen möglich zu machen.

Im Folgenden wird die Erfindung anhand von Ausführungsbeispielen beschrieben, die durch die beiliegenden Zeichnungen näher erläutert werden. Hierbei zeigen:
- Figur 1: eine isometrische Darstellung eines Transportsterns gemäß dem Stand der Technik;
- Figur 2: eine schematische Draufsicht auf einen Übergabepunkt zweier Transportsterne gemäß einer Ausführungsform der Erfindung;
- Figur 3: eine isometrische Darstellung einer Ausführungsform der erfindungsgemäßen Greifeinrichtung;
- Figur 4: eine Draufsicht auf die Greifeinrichtung gemäß Figur 3;
- Figur 5: eine isometrische Darstellung einer weiteren Ausführungsform der Erfindung;
- Figur 6: eine isometrische Darstellung der Greifeinrichtung gemäß Figur 5 in einer Greifposition;
- Figur 7: einen Querschnitt durch einer weiteren Ausführungsform der Erfindung;
- Figur 8: eine isometrische Darstellung der Ausführungsform aus Figur 7 in der Greifposition
- Figuren 9 bis 12: isometrische Darstellungen verschiedener Ausführungsformen eines Positionierelements.

Im Folgenden werden für gleiche und gleichwirkende Bauteile dieselben Bezugsziffern verwendet, wobei bisweilen Hochindizes ihre Anwendung finden.

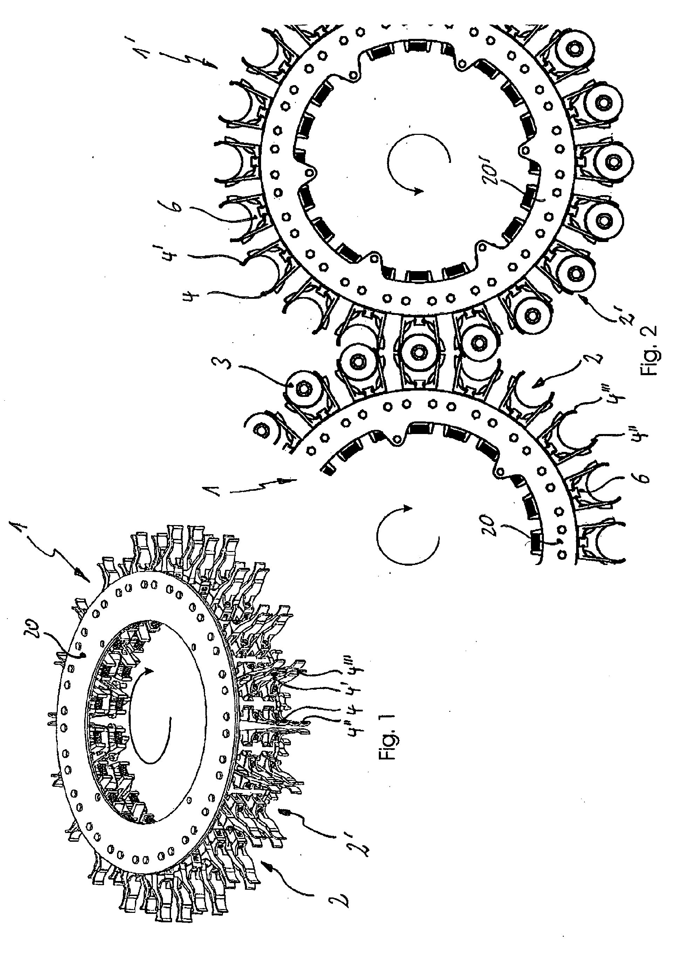

Figur 1 zeigt eine isometrische Darstellung eines Transportsterns 1, wie er aus dem Stand der Technik bereits bekannt ist. Der Transportstern 1 umfasst einen Grundkörper 20 an dem eine Mehrzahl an Greifeinrichtungen 2 radial angeordnet ist. Die Greifeinrichtungen 2 umfassen hier jeweils zwei korrespondierende Greifarmpaare 4, die zum Greifen eines Gefäßes 3 (siehe Figur 2) ausgebildet sind. Der Transportstern 1 dient als Transporteinrichtung für Gefäße, beispielsweise in Füllstationen der Getränkeindustrie, aber auch an anderen Stationen bei denen es um das Greifen und Transportieren und insbesondere Umsetzen von Gegenständen wie Getränkeflaschen, hier ganz allgemein als "Gefäße" bezeichnet, geht.

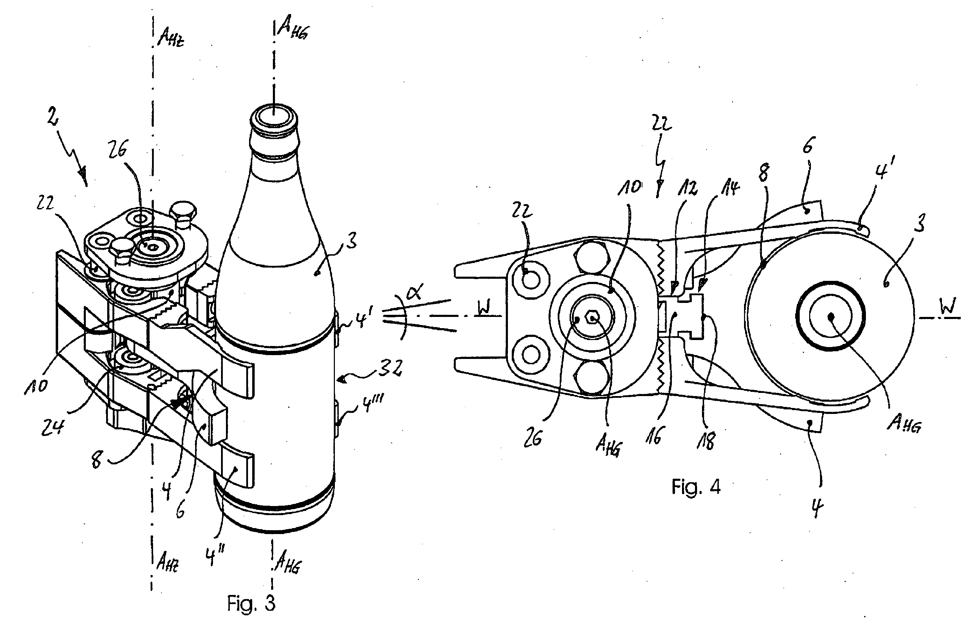

In Figur 2 ist ein solcher Umsetzpunkt nun unter Verwendung einer Ausführungsform erfindungsgemäßer Transportsterne 1 dargestellt. Auch hier weisen die beiden Transportsterne 1 einen Grundkörper 20 auf, an dessen Unterseite die erfindungsgemäßen Greifeinrichtungen 2 angeordnet sind. Die Greifeinrichtungen 2 weisen wieder Greifarmpaare 4 (siehe auch Figur 3) auf, die zum Greifen der Gefäße 3 ausgebildet sind. Bei dem hier dargestellten Übergabepunkt werden Gefäße 3 von einem Transportstern 1 auf einen zweiten Transportstern 1' übergeben. Dazu rotieren die beiden Transportsterne 1 so relativ zueinander, dass die vom Transportstern 1 bzw. deren Greifeinrichtungen 2 gefassten Gefäße 3 dem anderen Transportstern 1' bzw. dessen. Greifeinrichtungen 2 zugeführt werden können.

Erfindungsgemäß sind dabei alle Greifeinrichtungen mit Positionierelementen 6 ausgerüstet, die eine Positionierung der Gefäße 3 in der Greifposition erlauben bzw. sicherstellen.

Die Figuren 3 und 4 zeigen eine Ausführungsform der Greifeinrichtung 2, wie sie beispielsweise bei den Transportsternen 1 gemäß Figur 2 ihre Anwendung findet in einer isometrischen Darstellung (Figur 3) und einer Draufsicht (Figur 4).

Die Greifeinrichtung 2 umfasst wie bereits erwähnt korrespondierende Greifarme 4, die hier in einer Greifposition dargestellt sind, in der sie ein Gefäß 3, hier eine Getränkeflasche fixieren.

Erfindungsgemäß weist die Greifeinrichtung 2 zur Positionieren des Gefäßes 3 in der Greifposition bzw. zum Erreichen einer genauen Greifposition ein Positionierelement 6 auf, das hier als Spritzgusskunststoffbauteil ausgebildet ist.

Das Positionierelement 6 weist einen Positionieranschlag 8 auf, der bei dieser Ausführungsform positionierend am Mittelbereich 32 des Gefäßes 3 ansteht und so eine genaue Positionierung des Gefäßes 3 ermöglicht.

Die Greifarme 4 und das Positionierelement 6 bzw. dessen Positionieranschlag 8 sind dabei so ausgebildet, dass die Greifarme 4 das Gefäß 3 während des Greifvorgangs gegen das Positionierelement 6 bzw. dessen Anschlag 8 drängen. Dadurch wird u.a. am Positionieranschlag eine Haftreibungskraft aktiviert, die zu einer verbesserten Fixierung des Gefäßes 3 in der Greifposition führt.

Das Positionierelement 6 ist an einem Zentralkörper 10 der Greifeinrichtung 2 angeordnet, an der darüber hinaus beidseitig die korrespondierenden Greifarme 4 angeordnet sind. Diese sind jeweils über eine Drehachse 22 am Zentralkörper 10 angeschlagen und über eine Nockenwelle 26, die im Zentralkörper 10 gelagert und mit entsprechenden Lagerelementen 24 der Greifarme 4 in Wirkeingriff steht, zwischen einer Öffnungsposition (nicht dargestellt) und der Greifposition bewegbar.

Vorzugsweise ist dabei das Positionierelement 6 an einem Montagepunkt 12 am Zentralkörper 10 angeordnet, der auf einer Winkelhalbierenden W des Winkels α liegt, der von den jeweiligen Greifarmpaaren 4, 4' bzw. 4", 4"' eingeschlossen wird.

Das Positionierelement 6 ist über eine Montageeinrichtung 14 lösbar r am Zentralkörper 10 angeordnet. Die Montageeinrichtung 14 weist dazu einen Montagefortsatz 16 auf, der am Zentralkörper 10 angeordnet ist und eine Montageaufnahme 18, die am Positionierelement 6 ausgebildet ist. Bei dieser Ausführungsform ist der Montagefortsatz 16 ein genuteter Montagefortsatz, der im Wesentlichen senkrecht zur Haupterstreckungsachse A_{HZ} des Zentralkörpers bzw. senkrecht zur Haupterstreckungsachse A_{HG} des Gefäßes aus dem Zentralkörper 10 hervorsteht und auf den das Positionierelement 6 mit der Montageaufnahme 18 von oben in Richtung der Haupterstreckungsachsen A_{HZ}, A_{HG} aufschiebbar ist. Die Haupterstreckungsachse A_{HZ} läuft hier parallel zur Haupterstreckungsachse A_{HG} des Gefäßes 3, sodass eine sichere Fixierung des Positionierelementes 6 gewährleistet ist. Unter Verwendung der Montageeinrichtung 14 ist eine werkzeuglose Montage des Positionierelementes 6 am Zentralkörper 10 möglich.

Wie insbesondere in Figur 4 dargestellt, sind das Positionierelement 6 und insbesondere dessen Positionieranschlag 8 komplementär zu einem Teil der Außengeometrie des Gefäßes 3 ausgebildet. Dies garantiert eine sichere und genaue Positionierung des Gefäßes 3 in der Greifposition, wie sie insbesondere in den Figuren 3 und 4 dargestellt ist. Die Greifarme 4 sind dabei, wie bereits erwähnt, so ausgebildet, dass sie das Gefäß 3 während des Greifvorgangs gegen den Positionieranschlag 8 und aufgrund dessen zur Außenform des Gefäßes 3 komplementären Ausbildung auch in die richtige Greifposition drängen.

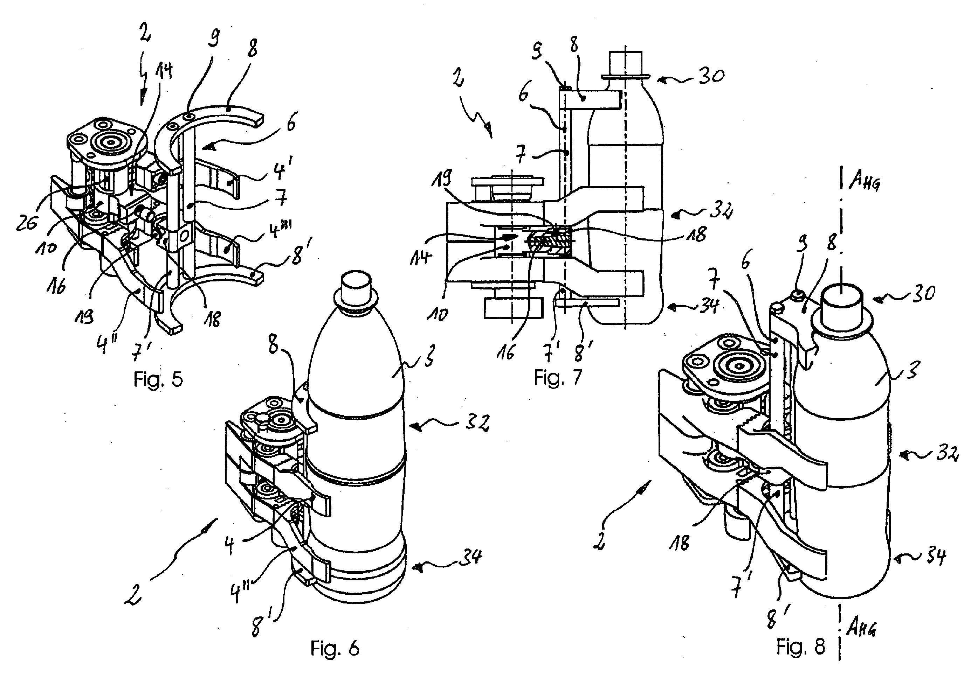

Die Figuren 5 und 6 zeigen eine weitere Ausführungsform einer Greifeinrichtung 2 in einer isometrischen Darstellung in einer Öffnungsposition ohne Gefäß (Figur 5) und einer Greifposition mit gegriffenem Gefäß 3 (Figur 6). Im Gegensatz zu der zuvor beschriebenen Ausführungsform weist das hier dargestellte Positionierelement 6 zwei Positionieranschläge 8 auf, die das Gefäß 3 an unterschiedlichen Positionen, nämlich einem unteren Endbereich 34, dieser entspricht in etwa dem Gefäßboden und einem mittleren Bereich 32 positionieren. Auch hier sind die Greifarme 4 wieder so ausgebildet, dass sie das Gefäß 3 in der Greifposition (Figur 6) gegen den jeweiligen Positionieranschlag 8 des Positionierelementes 6 drängen. Der Übersichtlichkeit halber sind in Figur 5 bei dieser Ausführungsform nur drei der vier zur Positionierung und zum Greifen nötigen Greifarmen 4 dargestellt, so dass, wie im folgenden noch erläutert, die Sicht auf den Zentralkörper 10 und die darin gelagerte Nockenwelle 26 frei liegt.

Das Positionierelement 6 weist bei dieser Ausführungsform eine etwas andere Montageeinrichtung 14 zur lösbaren Montage des Positionierelementes 6 an der Greifeinrichtung 2 bzw. am Zentralkörper 10 auf. Zwar ist auch hier ein Montagefortsatz 16 vorgesehen, der am Zentralkörper 10 angeordnet und aus diesem senkrecht hervorsteht; die Montageaufnahme am Positionierelement 6 ist jedoch etwas anders ausgebildet, als dies zuvor bei Figuren 3 und 4 der Fall war. Hier ist die Montageaufnahme 18 mit einem befederten Druckbolzen 19 versehen, der die Arretierung und die Dearretierung des Positionierelementes 6 am Zentralkörper 10 erlaubt. Dazu kann der befederte Druckbolzen 19 so bewegt werden, dass er einen Arretierungseingriff mit dem genuteten Montagefortsatz 16 freigibt oder herstellt. Insofern ist also auch hier eine werkzeuglose Demontage und Montage des Positionierelementes 6 am Zentralkörper 10 möglich.

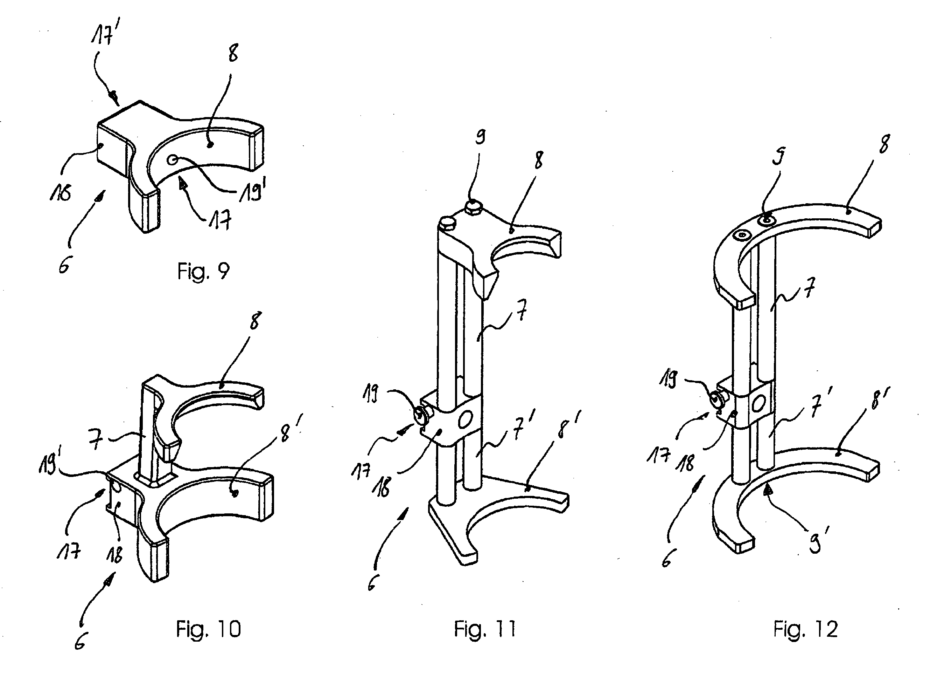

Das Positionierelement 6 weist bei dieser Ausführungsform Hauptkörper 7 auf, an denen die bereits erwähnten Positionieranschläge 8 über entsprechende Montagemittel 9 lösbar befestigbar sind. Die Montagemittel 9 sind hier als Schrauben dargestellt, die in die Hauptkörper 7 einschraubbar sind. Natürlich können hier auch andere Montagemittel, also Rastarretierungen, gefederte Bolzenarretierungen oder dergleichen Schnellverschlüsse verwendet werden, um die Montageanschläge 8 insbesondere werkzeuglos an den Hauptkörpern 7 montierbar und/oder demontierbar auszubilden. Eine solche Ausgestaltung erlaubt die Verwendung unterschiedlicher an das zu greifende Gefäß 3 adaptierter Positionieranschläge 8. Bei dieser Ausführungsform ist also nicht nur das Positionierelement 6 lösbar am Zentralkörper 10, sondern auch jeder Positionieranschlag 8 bzw. 8' lösbar und somit adaptierbar ausgebildet. Wie im Folgenden noch detailliert beschrieben (siehe Figuren 9 bis 12) ist es zudem möglich die Hauptkörper 7 ebenfalls austauschbar und so das Positionierelement noch vielseitiger adaptierbar auszugestalten.

Bei der in Figur 5 dargestellten Ausführungsform wird deutlich, dass es natürlich auch möglich ist das Positionierelement 6 derart über einen Aktuator (nicht dargestellt) mit der Nockenwelle 26 zu koppeln, dass es aktiv eine Positionierung des Gefäßes 3 insbesondere in der Greifposition aber auch vor Erreichen oder nach Erreichen der Greifposition vornimmt. So kann also beispielsweise der Montagefortsatz 16 mit der Nockenwelle 26 gekoppelt werden, dass er kurz vor Erreichen der Greifposition das Positionierelement 6 in Richtung der Greifposition drängt und so eine aktive Positionierung oder aber ein zusätzliche Fixierung des Gefäßes 3 bewirkt.

Die Figuren 7 und 8 zeigen eine weitere Ausführungsform der Greifeinrichtung 2 in einem Längsschnitt (Figur 7) und einer isometrischen Darstellung (Figur 8). Die dargestellt Greifeinrichtung 2 unterscheidet sich von der in den Figuren 5 und 6 dargestellten Greifeinrichtung 2 lediglich durch die Ausbildung des Positionierelementes 6 und insbesondere durch die Ausbildung der Positionieranschläge 8 und der Grundkörper 7.

Bei der hier dargestellten Ausführungsform sind die Grundkörper 7 und Positionierungsanschläge 8 so ausgebildet, dass sie das gegriffene Gefäß 3 nun nicht mehr am mittleren Bereich 32 sondern neben dem unteren Endbereich 34 auch am oberen Endbereich 30, also dem Gefäßhals greifen. Gerade bei sehr (im Vergleich zu deren Breite) hohen Gefäßen 3 bewirkt eine solche Ausbildung des Positionierelementes 6 eine sehr genaue und auch bei hohen Greiftakten sichere Positionierung des Gefäßes 3.

Wie insbesondere in Figur 8 dargestellt ist dabei der obere Positionieranschlag 8 am oberen Endbereich 30 so ausgebildet, dass er nicht nur dem Querschnittsradius sondern auch dem Querschnittsverlauf über die Höhe des Gefäßes 3 entlang seiner Haupterstreckungsachse A_{HG} angepasst ist. Dies garantiert eine weitere genaue Positionierung und eine Aktivierung einer Haftreibung, die die anderen Bauteile der Greifeinrichtung 2 entlastet. Auch hier sind die Positionieranschläge 8 wieder über Montagemittel 9 lösbar an den Hauptkörpern 7 angeordnet. Um eine Adaption der Positionieranschläge 8 entlang der Hauptachse A_{HG} des Gefäßes zu erlauben, kann erfindungsgemäß dazu wenigstens ein Hauptkörper 7 aus der Montageaufnahme 18 herausgelöst und gegen einen angepassten, in diesem Fall verlängerten Hauptkörper 7 ersetzt werden. Das bedeutet also, dass die in den Figuren 7 und 8 gezeigte Ausführungsform des Positionierelementes 6 der Ausführungsform aus den Figuren 5 und 6 allerdings mit angepassten Hauptkörpern 7 und Positionieranschlägen 8 entspricht.

In Figur 7 ist die Ausbildung der Montageeinrichtung 14 im Schnitt dargestellt. Erkennbar ist der am Zentralkörper 10 ausgebildete Montagefortsatz 16, der in die Montageaufnahme 18 eingreift und durch den gefederten Druckbolzen 19 arretiert ist.

In den Figuren 9 bis 12 sind unterschiedliche Ausführungsformen eines Positionierelementes 6 in einer isometrischen Darstellung gezeigt. Die Figuren 9 und 10 zeigen dabei ein Positionierelement 6 mit jeweils integral ausgebildeten Positionieranschlägen 8. In den Figuren 11 und 12 sind dagegen die Positionieranschläge 8 lösbar an jeweils zwei Hauptkörpern 7 angeordnet und über Montagemittel 9 befestigt. Wie bereits mit Bezug auf die Figuren 7 und 8 beschrieben sind dabei die Hauptkörper 7 ebenfalls lösbar an den Montageaufnahmen 18 angeordnet, sodass sie durch verschiedene und insbesondere unterschiedlich lange Hauptkörper austauschbar sind.

Weiter dargestellt sind in den Figuren 9 bis 12 unterschiedliche Montageeinrichtungen 18 bzw. Arretierungsmittel 17 um die Positionierelemente 6 am jeweiligen Zentralkörper 10 oder einem anderen Bauteil der Greifeinrichtung 2 zu befestigen.

Das in Figur 9 dargestellte Positionierelement 6 entspricht diesbezüglich dem in Figur 4 dargestellten Positionierelement, das über eine entsprechende Montageaufnahme 18 von oben (bzgl. der Hauptachse A_{HZ} des Zentralkörpers bzw. der Hauptachse A_{HG} des gegriffenen Gefäßes 30 (Figur 4)) auf einen entsprechend ausgebildeten Montagefortsatzes 16 aufgeschoben werden kann. Eine Sicherung gegen ein versehentliches Herunterschieben vom Montagefortsatz 16 erfolgt mittels einer Madenschraube (nicht dargestellt), die über eine entsprechende Bohrung 19' in die Montageaufnahme 18 eingeführt werden kann und dann arretierend am entsprechenden Montagefortsatz 16 (Figur 4) ansteht.

Eine ähnliche Schraubenkonstruktion ist in Figur 10 gezeigt, bei der das Positionierelement 6 mit seiner Montageaufnahme 18 ebenfalls auf einen Montagefortsatz 16 aufgesetzt wird (siehe auch Figur 7), die Sicherung dann jedoch über eine in Vergleich zu Figur 9 seitlich gelagerte Bohrung 19' und eine darin eingeführte Arretierungsschraube (nicht dargestellt) erfolgt.

Die Figuren 11 und 12 zeigen ein Arretierungsmittel 17, wie es bereits mit Bezug auf die Figuren 5 bis 8 im Detail beschrieben wurde, bei dem eine Sicherung mittels eines gefederten Druckbolzens oder dergleichen selbsthemmenden Elemente erfolgt.

### Bezugzeichen

- 1: Transportstern
- 2: Greifeinrichtung
- 3: Gefäß
- 4: Greifarm
- 6: Positionierelement
- 7: Hauptkörper
- 8: Positionieranschlag
- 9: Montagemittel
- 10: Zentralkörper
- 12: Montagepunkt
- 14: Montageeinrichtung
- 16: Montagefortsatz
- 17: Arretierungsmittel
- 18: Montageaufnahme
- 19: gefederter Druckbolzen bzw. selbsthemmendes Element
- 19': Bohrung
- 22: Drehachse des Greifarms
- 24: Lagerelement
- 26: Nockenwelle
- 30: oberer Endbereich bzw. Gefäßhals
- 32: mittlerer Bereich
- 34: unterer Endbereich bzw. Gefäßboden
- A_{HZ}: Hauptachse des Zentralkörpers
- A_{HG}: Hauptachse des Gefäßes
- W: Winkelhalbierende
- α: Winkel zwischen den Greifarmen

## Patentansprüche

1. Greifeinrichtung für einen Transportstern (1) oder dergleichen Transporteinrichtung, mit paarweise korrespondierend angeordneten Greifarmen (4) zum Greifen und Halten eines Gefäßes (3) oder dergleichen Körpers in einer Greifposition, die beidseitig an einem Zentralkörper (10) angeordnet sind, wobei die Greifeinrichtung (2) wenigstens ein von den Greifarmen (4) unabhängiges Positionierelement (6) aufweist, das derart ausgebildet ist, dass es das zu greifende Gefäß (3) wenigstens entlang einer Achse in der Greifposition positioniert, wobei das Positionierelement (6) über eine Montageeinrichtung (14) lösbar am Zentralkörper (10) angeordnet ist,
**dadurch gekennzeichnet, dass**
die Montageeinrichtung (14) einen Montagefortsatz (16) am Zentralkörper (10) und eine Montageaufnahme (18) am Positionierelement (6) oder umgekehrt aufweist, die miteinander in einen lösbaren Wirkeingriff bringbar sind, wobei die Montageeinrichtung (14) als Nut- und Federsystem ausgebildet ist, bei dem an der Greifeinrichtung (2) eine T-förmige Feder hervorsteht, über die das Positionierelement parallel zur Erstreckungsachse des Zentralkörpers (10) mit einer komplementären Aufnahme ausschiebbar ist.

2. Greifeinrichtung für einen Transportstern (1) oder dergleichen Transporteinrichtung, mit paarweise korrespondierend angeordneten Greifarmen (4) zum Greifen und Halten eines Gefäßes (3) oder dergleichen Körpers in einer Greifposition, die beidseitig an einem Zentralkörper (10) angeordnet sind, wobei die Greifeinrichtung (2) wenigstens ein von den Greifarmen (4) unabhängiges Positionierelement (6) aufweist, das derart ausgebildet ist, dass es das zu greifende Gefäß (3) wenigstens entlang einer Achse in der Greifposition positioniert, wobei das Positionierelement (6) über eine Montageeinrichtung (14) lösbar am Zentralkörper (10) angeordnet ist,
**dadurch gekennzeichnet, dass**
die Montageeinrichtung (14) einen Montagefortsatz (16) am Zentralkörper (10) und eine Montageaufnahme (18) am Positionierelement (6) oder umgekehrt aufweist, die miteinander in einen lösbaren Wirkeingriff bringbar sind, wobei an der Montageeinrichtung (14) ein befederter Druckbolzen vorgesehen ist, der im arretierten Zustand den Montagefortsatz (16) hintergreift und das Positionierelement (6) so an der Greifeinrichtung arretiert.

3. Greifeinrichtung nach Anspruch 1 oder 2,
**dadurch gekennzeichnet, dass**
das Positionierelement (6) wenigstens einen Positionieranschlag (8) aufweist, der derart ausgebildet ist, dass das zu greifende Gefäß (3) wenigstens in der Greifposition daran ansteht.

4. Greifeinrichtung nach Anspruch 3,
**dadurch gekennzeichnet, dass**
der Positionieranschlag (8) wenigstens teilweise komplementär zur Außenkontur des zu greifenden Gefäßes (3) ausgebildet ist.

5. Greifeinrichtung nach einem der vorangegangenen Ansprüche,
**dadurch gekennzeichnet, dass**
die Greifarme (4) und das Positionierelement (6) derart relativ zueinander angeordnet und ausgebildet sind, dass das zu greifende Gefäß (3) beim Greifvorgang gegen das Positionierelement (6) gedrängt wird.

6. Greifeinrichtung nach einem der vorangegangenen Ansprüche,
**dadurch gekennzeichnet, dass**
das Positionierelement (6) zur Winkelhalbierenden (W) des Winkels (α) achsensymmetrisch ausgebildet ist, der von den Greifarmen (4) in deren Greifposition eingeschlossen wird.

7. Greifeinrichtung nach einem der vorangegangenen Ansprüche 3-6
**dadurch gekennzeichnet, dass**
der Positionieranschlag (8) mittels einer Justiereinrichtung relativ zur Greifeinrichtung (2) entlang wenigstens einer Achse justierbar ist.

8. Greifeinrichtung nach einem der vorangegangenen Ansprüche,
**dadurch gekennzeichnet,dass**
das Positionierelement (6) mehrteilig ausgebildet ist, wobei es wenigstens einen Hauptkörper (7) und wenigstens einen Positionieranschlag (8) aufweist, die über entsprechende Montagemittel (9) miteinander verbindbar sind.

9. Transportstern für Gefäße (3) oder dergleichen Körper, mit einem rotierbaren Grundkörper (20) und mehreren über dessen Umfang verteilten Greifeinrichtungen (2) gemäß einem der vorhergehenden Ansprüche.

## Claims

1. A gripper device for a star conveyor (1) or similar conveyor device comprising gripper arms (4) arranged in corresponding pairs on both sides of a central body (10) for gripping and holding a container (3) or similar body in a gripped position, wherein the gripper device (2) comprises at least one positioning element (6) independent of the gripper arms (4) configured so as to position the container (3) to be gripped in the gripped position at least along one axis, wherein the positioning element (6) is releasably disposed on the central body (10) by means of a mounting mechanism (14),
**characterized in that**
the mounting mechanism (14) comprises a mounting projection (16) on the central body (10) and a mounting support (18) on the positioning element (6) or vice versa which are able to be brought into releasable operative engagement with one another, wherein the mounting mechanism (14) is designed as a tongue and groove system with a T-shaped tongue projecting from the gripper device (2) over which the positioning element can extend parallel to the axis of extension of the central body (10) by means of a complementary configured support.

2. A gripper device for a star conveyor (1) or similar conveyor device comprising gripper arms (4) arranged in corresponding pairs on both sides of a central body (10) for gripping and holding a container (3) or similar body in a gripped position, wherein the gripper device (2) comprises at least one positioning element (6) independent of the gripper arms (4) configured so as to position the container (3) to be gripped in the gripped position at least along one axis, wherein the positioning element (6) is releasably disposed on the central body (10) by means of a mounting mechanism (14),
**characterized in that**
the mounting mechanism (14) comprises a mounting projection (16) on the central body (10) and a mounting support (18) on the positioning element (6) or vice versa which are able to be brought into releasable operative engagement with one another, wherein a spring-loaded pressure bolt is provided on the mounting mechanism (14) which engages behind the mounting projection (16) in the locked state and thus locks the positioning element (6) to the gripper device.

3. The gripper device according to claim 1 or 2,
**characterized in that**
the positioning element (6) comprises at least one positioning stop (8) configured such that the container (3) to be gripped comes into contact with same at least in the gripped position.

4. The gripper device according to claim 3,
**characterized in that**
the positioning stop (8) is at least partly configured complementary to the outer contour of the container (3) to be gripped.

5. The gripper device according to any one of the preceding claims,
**characterized in that**
the gripper arms (4) and the positioning element (6) are configured and arranged relative to one another such that the container (3) to be gripped is pressed against the positioning element (6) during the gripping process.

6. The gripper device according to any one of the preceding claims,
**characterized in that**
the positioning element (6) is configured axially symmetrical to the bisector (W) of the angle (α) enclosed by the gripper arms (4) in their gripped position.

7. The gripper device according to any one of the preceding claims 3 to 6,
**characterized in that**
the positioning stop (8) is adjustable relative to the gripper device (2) along at least one axis by means of an adjusting device.

8. The gripper device according to any one of the preceding claims,
**characterized in that**
the positioning element (6) is of multi-part configuration, wherein same comprises at least one main body (7) and at least one positioning stop (8) able to be connected together via suitable mounting means (9).

9. A star conveyor for containers (3) or similar bodies comprising a rotatable base body (20) and a plurality of gripper devices (2) in accordance with any one of the preceding claims distributed around its periphery.

## Revendications

1. Dispositif de préhension pour une roue de transport en étoile (1) ou pour un dispositif de transport semblable, comprenant des bras de préhension (4) agencés par paires de manière à se correspondre, destinés à prendre et à maintenir un récipient (3) ou un corps semblable dans une position de préhension, qui sont agencés des deux côtés sur un corps central (10), dans lequel le dispositif de préhension (2) comprend au moins un élément de positionnement (6) indépendant des bras de préhension (4), élément qui est réalisé de telle façon qu'il positionne le récipient à prendre (3) au moins le long d'un axe dans la position de préhension, dans lequel l'élément de positionnement (6) est agencé de façon détachable sur le corps central (10) via un dispositif de montage (14),
**caractérisé en ce que**
le dispositif de montage (14) comporte un prolongement de montage (16) sur le corps central (10) et un logement de montage (18) sur l'élément de positionnement (6) ou inversement, lesquels peuvent être amenés dans un engagement actif détachable l'un avec l'autre, dans lequel le dispositif de montage (14) est réalisé sous forme de système à rainure-et-languette dans lequel une languette en forme de T dépasse sur le dispositif de préhension (2), languette via laquelle l'élément de positionnement est déplaçable parallèlement à l'axe d'extension du corps central (10) avec un logement complémentaire.

2. Dispositif de préhension pour une roue de transport en étoile (1) ou pour un dispositif de transport semblable, comprenant des bras de préhension (4) agencés par paires de manière à se correspondre, destinés à prendre et à maintenir un récipient (3) ou un corps semblable dans une position de préhension, qui sont agencés des deux côtés sur un corps central (10), dans lequel le dispositif de préhension (2) comprend au moins un élément de positionnement (6) indépendant des bras de préhension (4), élément qui est réalisé de telle façon qu'il positionne le récipient à prendre (3) au moins le long d'un axe dans la position de préhension, dans lequel l'élément de positionnement (6) est agencé de façon détachable sur le corps central (10) via un dispositif de montage (14),
**caractérisé en ce que**
le dispositif de montage (14) comporte un prolongement de montage (16) sur le corps central (10) et un logement de montage (18) sur l'élément de positionnement (6) ou inversement, lesquels peuvent être amenés dans un engagement actif détachable l'un avec l'autre, et **en ce qu'**il est prévu sur le dispositif de montage (14) un goujon presseur chargé par ressort qui, dans l'état arrêté, engage le prolongement de montage (16) par l'arrière et arrête ainsi l'élément de positionnement (6) sur le dispositif de préhension.

3. Dispositif de préhension selon la revendication 1 ou 2,
**caractérisé en ce que** l'élément de positionnement (6) comprend au moins une butée de positionnement (8) qui est réalisée de telle façon que le récipient à prendre est debout contre celle-ci au moins dans la position de préhension.

4. Dispositif de préhension selon la revendication 3,
**caractérisé en ce que** la butée de positionnement (8) est réalisée au moins partiellement complémentaire au contour extérieur du récipient à prendre (3).

5. Dispositif de préhension selon l'une des revendications précédentes,
**caractérisé en ce que** les bras de préhension et l'élément de positionnement (6) sont agencés les uns par rapport aux autres et sont réalisés de telle façon que le récipient à prendre (3) est forcé contre l'élément de positionnement (6) lors de l'opération de préhension.

6. Dispositif de préhension selon l'une des revendications précédentes,
**caractérisé en ce que** l'élément de positionnement (6) est réalisé à symétrie axiale par rapport à la bissectrice (W) de l'angle (α) qui est défini entre les bras de préhension (4) dans leur position de préhension.

7. Dispositif de préhension selon l'une des revendications précédentes 3 à 6,
**caractérisé en ce que** la butée de positionnement (8) est susceptible d'être ajustée le long d'au moins un axe au moyen d'un dispositif d'ajustement par rapport au dispositif de préhension (2).

8. Dispositif de préhension selon l'une des revendications précédentes,
**caractérisé en ce que** l'élément de positionnement (6) est réalisé en plusieurs parties, de sorte qu'il comprend au moins un corps principal (7) et au moins une butée de positionnement (8), qui peuvent être reliés l'un à l'autre via des organes de montage correspondants (9).

9. Roue de transport en étoile pour des récipients (3) ou des corps similaires, comprenant un corps de base rotatif (20) et plusieurs dispositifs de préhension (2) selon l'une des revendications précédentes, répartis sur sa périphérie.
